# EUROPEAN PATENT APPLICATION

(11) **EP 1 884 751 A1**
(43) Date of publication of application: **06.02.2008**
(21) Application number: 06015953.0
(22) Date of filing: 01.08.2006
(51) Int. Cl.: G01F 15/02, G01F 15/04, G01F 15/06

(54) **System and method for processing data related to a volumetric flow rate**

(71) Applicant: N & P GAS, 11070 Novi Beograd (CS)
(72) Inventor: Kuzmanovic, Slobodan, 11080 ZEMUN (YU); Blanusa, Zoran, 21000 NOVI SAD (YU); Piletic, Jovan, 11070 NOVI BEOGRAD (YU); Piletic, Radovan, 11070 Novi Beograd (YU)
(74) Representative: Wörz, Volker Alfred

(57) **Abstract**

The invention relates to a system and a method for collecting and processing information related to a volumetric flow, wherein the system comprises a mechanical flow meter for measuring the volumetric flow, in particular the flow of a gas or a liquid. To increase the preciseness of the measurements of volumetric flow rates measured with the mechanical flow meter, it is suggested to collect measured data related to the measured flow by means of a sensor attached to the flow meter and adapted to transmit the measured data to a collecting unit. The collecting unit receives the measured data and determines the volumetric flow depending on the measured data. The measured data are then automatically corrected depending on at least one parameter possibly increasing the preciseness by means of a correction unit.

## Description

The invention relates to a system for collecting and processing information related to a volumetric flow, wherein the system comprises a mechanical flow meter for measuring the volumetric flow, in particular the flow of a gas or a liquid.

The invention further relates to a method for collecting and processing information related to a volumetric flow, wherein values related to the volumetric flow of a gas or a liquid are measured by means of a mechanical flow meter.

The invention also relates to a computer program which can be run on a system for collecting and processing information related to a volumetric flow.

Flow meters are known to measure the amount of a gas or a liquid flowing, for example, through a pipeline. This allows to measure the volume of the gas or the liquid flown through the pipeline within a predetermined time-interval.

Flow meters are used to measure the water consumption or the consumption of natural gas in residential buildings and in factory buildings. The flow meter used for measuring natural gas is also called gas meter. Gas meter are usually used at every residence and commercial building that consumes fuel gas supplied by a gas utility.

There exist various different types of flow meters, including piston meters, venturi meters or magnetic flow meters. A piston meter operates on the principle of a piston rotating within a chamber of known volume. For each rotation, a relatively fixed amount of water or gas passes through the piston chamber. Thus, the amount of liquid or gas can be determined by counting the number of rotations of the piston chamber and multiplying this number with the known volume of the chamber. A piston meter belongs to the class of so-called positive displacement meters.

Another type of positive displacement meter is the so-called diaphragm meter. Diaphragm meters are a common type used to measure the consumption of natural gas in commercial or residential buildings. Within a diaphragm meter two chambers formed by movable diaphragms are filled by the gas source and emptied into the gas load, alternating their roles, so that gas delivery to the load is essentially continuous. As the diaphragms expand and contract, levers connected to cranks convert the linear motion of the diaphragms into rotary motion which then drives a counter-mechanism.

A further type of positive displacement meter is the so-called rotary meter which uses a Roots blower rather than a pair of diaphragms. The Roots blower comprises two impellers with roughly a figure of eight-shape. Again, the number of rotations is counted and used for determining the flow rate.

This shows that using a flow meter, the volume is often determined by counting how often a fixed amount of liquid or gas flows through the flow meter.

In many application areas a highly precise measuring of flow rates is needed. Therefore, flow meters usually are calibrated and officially certified. However, frequently the measured volume has to be expressed according to standardized parameters, for example according to a fixed temperature of the liquid or gas. In particular, when measuring the volumetric flow of gas, the pressure of the gas and the temperature highly influence the measured volume.

Further on, often not the volume itself is the value to be interested in. Instead of that, for example the thermal energy contained in fuel gas is desired by the gas utility. To convert from volume to thermal energy, the pressure and temperature of the gas must be taken into consideration. Since the temperature and the pressure vary in different parts of a country or a town, gas meters are calibrated to consider an average value that is characteristic to the location, the gas meter is to be installed at.

Since usually average parameters are considered, the real flow often differs from the measured thermal energy based on the measured volume. Furtheron, since fuel gas typically originates from different sources of production having different average thermal energies (so-called calorific values), further miscalculations are system-inherent.

It is, therefore, an object of the present invention to increase the preciseness of the measurements of volumetric flow rates measured with a mechanical flow meter.

This object is solved by a method as mentioned above, wherein measured data related to the measured flow are collected by means of a sensor attached to the flow meter and adapted to transmit the measured data to a collecting unit. The collecting unit receives the measured data and determines the volumetric flow depending on the measured data. The measured data are then automatically corrected depending on at least one parameter possibly increasing the preciseness by means of a correction unit.

The sensor is for example embodied as a magnetic sensor or an acoustic sensor. The counter-mechanism included into mechanical flow meters often provides a magnetic element used for counting the rotary motion in a positive displacement meter, wherein the magnetic element is attached to a turntable. Thus, a magnetic sensor can collect the varying magnetic field induced by the rotating magnetic element. The magnetic sensor provides analoque or digital data, e. g. sampled pulses, that are transmitted to the collecting unit. The collecting unit can be connected to the sensor via a wired or a wireless communication network.

The measured data or the computed volumetric flow, is then corrected according to a parameter to increase the preciseness of the volumetric flow. In particular, the volumetric flow is computed by taking at least one parameter into account, wherein the parameter advantageously describes a temperature of the medium, a pressure of the medium, an atmospheric pressure, or a mechanical characteristic of the flow meter itself. This allows to significantly increase the preciseness of the measured volume and thus to increase for example the preciseness of the measured gas consumption.

According to a preferred embodiment of the present invention, the method further comprises the step of providing the determined volumetric flow for being displayed, further processed, or transmitted via a communications network. The determined volumetric flow can, in particular, be received by an administration unit that is connectable to the communication network. Preferably, the administration unit causes the determined volumetric flow to be displayed or to be transmitted via the communications network upon request. This means that for example the gas utility can access the determined volumetric flow. Furtheron, a person of the residential building or the commercial building the flow meter is attached to can also access the determined volumetric flow.

According to a preferred embodiment, the parameters related to collecting, correcting or evaluating data are transmitted from the administration unit to the corresponding unit, in particular to the collecting unit or the correction unit. This allows to remotely service the collecting unit or the correction unit. If, for example, new parameters are available, they can be transmitted from the administration unit to the collecting unit or the correction unit and thus immediately considered for determining further flow rates. Transmitting of updated parameters can for example be caused by changes according to the temperature of the gas or the gas pressure.

Gas meters are often placed in apartment houses, wherein for each apartment a separate gas meter is installed. According to a preferred embodiment of the present invention, the determined volumetric flow from several collecting units is received by a bundling unit connectable to the communications network. Advantageously, the bundling unit communicates with the administration unit and with the collecting units. The bundling unit could for example be installed in the apartment house, where several connecting units and gas meters are placed. Each collecting unit collects data from a specific gas meter and transmits these data to the bundling unit. The data could for example be transmitted via a WLAN (wireless local area network). It is also conceivable that the bundling unit and the collecting units are connected via wirelines. The bundling unit can then store the received volumetric flows until they are transmitted to the administration unit. Data transmission between the bundling unit and the administration unit could be caused by the bundling unit or upon request of the administration unit. Advantageously, the communications network connecting the bundling unit with the administration unit is based on a cellular network.

According to another preferred embodiment, the bundling unit automatically transmits the collected data to the administration unit depending on an event at least describing a request of the administration unit, a predefined time, a predefined time interval, an alarm signal, or an amount of available or used storage space. A predefined time for example could cause the bundling unit to transmit the collected data each month or each day to the administration unit. A predefined time interval could cause the bundling unit to transmit the collected data every ten days to the administration unit. An alarm signal, for example generated by a system malfunction, could cause the bundling unit to transmit the collected data to the administration unit and thus could prevent the system from losing data. Furtheron, the bundling unit could be caused to transmit the collected data to the administration unit, whenever an amount of available or used storage space is exceeded. This could be particularly advantageous, if usually the bundling unit transmits the data upon request of the administration unit and the administration unit fails to send such a request, which would cause an overflow of the storage space within the bundling unit, if the collected data are not deleted according to another strategy.

The object is also solved by the system as mentioned above, wherein the system provides means for executing the inventive method. In particular, the system comprises a sensor attached to the flow meter and connectable to a collecting unit. Furtheron, the system comprises a correction unit adapted to automatically correct measured data depending on at least one parameter, possibly increasing the preciseness. In particular, the system comprises means to automatically compute a corrected volumetric flow.

According to a preferred embodiment, the system also comprises an administration unit for receiving volumetric flow-related data and for transmitting parameters to the correction unit. Advantageously, the system also comprises a bundling unit adapted to transmit measured data and in particular corrected volumetric flow-related data to the administration unit at a predefined time, after a predefined time interval, or upon request of the administration unit, an alarm signal, and/or an amount of available or used storage space.

The object is also solved by a method for upgrading a mechanical volumetric flow meter by attaching the inventive system, in particular by attaching a sensor, connecting the sensor with a collecting unit and attaching a correction unit adapted to automatically correct the measured data depending on at least one parameter possibly increasing the preciseness of the measured volumetric flow.

The realization of this invention in the form of a computer program is particularly important. Parts of the computer program may be run on different processing units, e. g. the collecting unit, the correction unit, the bundling unit, and the administration unit, to carry out the inventive method. The invention is, thereby, realized by the computer program, wherein this computer program represents the invention in the same sense as the method for the execution of which the computer program is suitable. The computer program is preferably stored in one or more storage elements. A storage element may in particular be a random-access-memory (RAM), a read-only-memory (ROM), a hard disc, an optical storage medium or a memory element attached to a processing unit.

Further features, applications and advantages of the invention will become apparent from the following description of exemplary embodiments of the invention that are shown in the drawings.
- Figure 1: shows a schematised system adapted to execute the inventive method according to a first embodiment;
- figure 2: shows a schematised system according to a second embodiment;
- figure 3: shows a schematised system according to a third embodiment and comprising several flow meters;

- figure 4: shows a schematised system according to a fourth embodiment; and
- figure 5: shows a simplified diagram visualizing some aspects of the data flow within the system according to an embodiment of the inventive method.

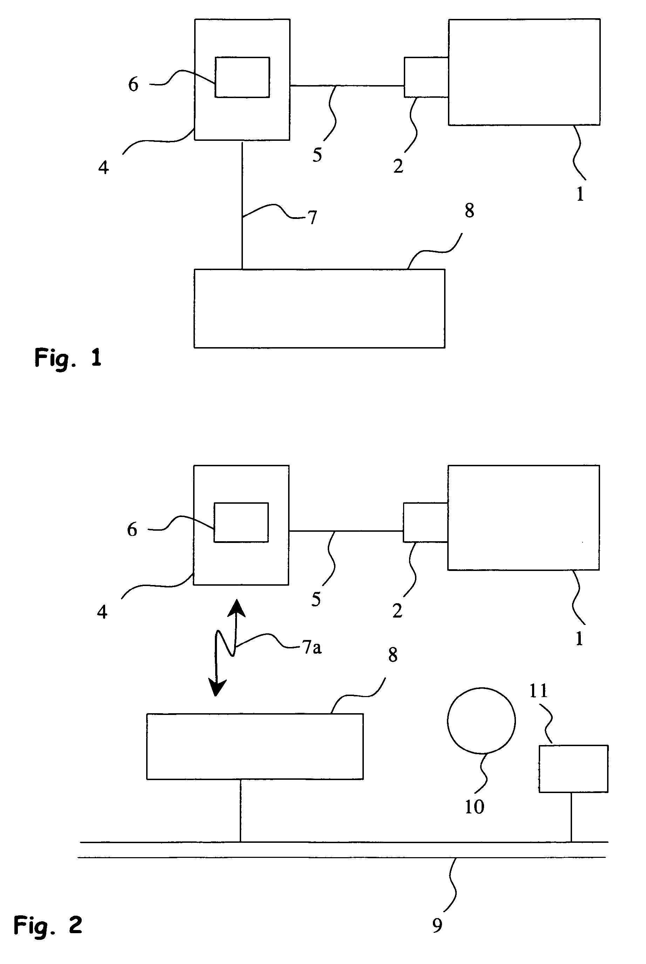

Figure 1 shows a flow meter 1 and a sensor 2 attached to the flow meter 1. The sensor 2 could for example be a magnetic sensor or an acoustic sensor. The flow meter 1 could be a gas meter, for example a positive displacement meter, such as a diaphragm meter or a rotary meter. The sensor 2 can then collect the pulses generated by the flow meter having a rotating magnetic element or generating a noise that can be used to count the number of times, a predefined volume is transmitted through the flow meter.

The sensor 2 is connected via a data link 5 to a collecting unit 4. The data line 5 electrically connects the sensor 2 with the collecting unit 4. The collecting unit 4 comprises a collecting unit 6. The collecting unit 4 could be realized for example as an embedded computer system. The correction unit 6 could be realized as software implemented on the collecting unit 4. It is also conceivable, that the correction unit 6 is also realized in hardware, e.g. as an embedded computer system.

The collecting unit 4 is connected to an administration unit 8 via a data link 7, electrically connecting the administration unit 8 with the collecting unit 4. The administration unit 8 can also be implemented as an embedded computer system. The administration unit 8 could also be realized as a personal computer, a personal digital assistant (PDA) or a cell phone. In particular, the administration unit 8 could be realized in software executed on the collecting unit 4. It is also conceivable that the collecting unit 4 and the correction unit 6 are both implemented as software running on the administration unit 8. In this case, the data link 7 could be realized via function calls.

This shows, that the different processing units, namely the collecting unit 4, the correction unit 6 and the administration unit 8 could be realized in software as well as in hardware.

The embodiment shown in figure 1 could for example be used as a small system attached to a single flow meter. In particular, this embodiment could be used to upgrade an existing mechanical gas meter and thus to generate more precise volumetric flow-related information.

Figures 2 to 4 show further embodiments of the inventive system, wherein corresponding components are denoted with the same or similar reference signs.

The administration unit shown in figure 2 is connected to the collecting unit 4 via a wireless data link 7a. The wireless data link 7a could be for example a WLAN or a cellular network, e.g. based on GPRS or UMTS.

The administration unit 8 is connected to a communications network 9, for example the internet. A person 10 has access to a computer system 11, as a personal computer or a PDA, that is also connected to the communications network 9. The person 10 could be for example an administrator of the system, a person working for the gas utility or a person consuming the gas that is measured via the flow meter 1.

The system shown in figure 2 allows the person 10 to access the administration unit 8 for retrieving data, such as the corrected volumetric flow. This system could in particular enable an administrator to transmit new or updated parameters to the administration unit 8. The administration unit 8 then could transmit these parameters via the wireless data link 7a to the collecting unit 4. The parameters could describe the pressure of the gas, e.g. measured by the administrator or the gas supplier. The parameters could also describe another calorific value, e.g. if gas from another distributor is now transmitted to the residential building, the flow meter is installed at.

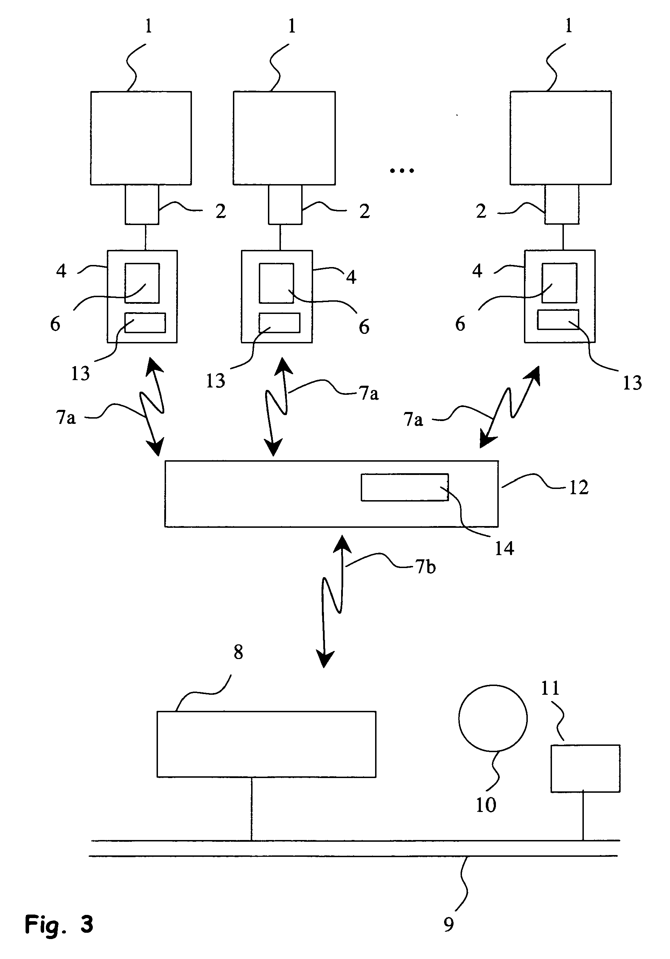

Figure 3 shows a system comprising several flow meters 1 attached by the sensor 2 and connected to the collecting unit 4. Each collecting unit 4 comprises a display 13. The display 13 could be used to display the state of the collecting unit, for example, whether it is working correctly or not. The display 13 could further display the actual amount of consumed gas, wherein the amount could be corrected according to the inventive method. The display could further show messages, transmitted from the administration unit 8 to the collecting unit, e.g. to inform a field service personal on how to install the flow meter or how to connect the sensors or the like.

The collecting units 4 are connected via the wireless data link 7a to a bundling unit 12. The bundling unit 12 is connected via a wireless data link 7b with the administration network 8. The bundling unit 12 stores the data collected by the collecting units 4 and transmits these data to the administration unit 8, for example upon request of the administration unit 8 or when another event has occurred. According to this embodiment, the bundling unit 12 also comprises a display 14. The display 14 could be used to display information according to display 13.

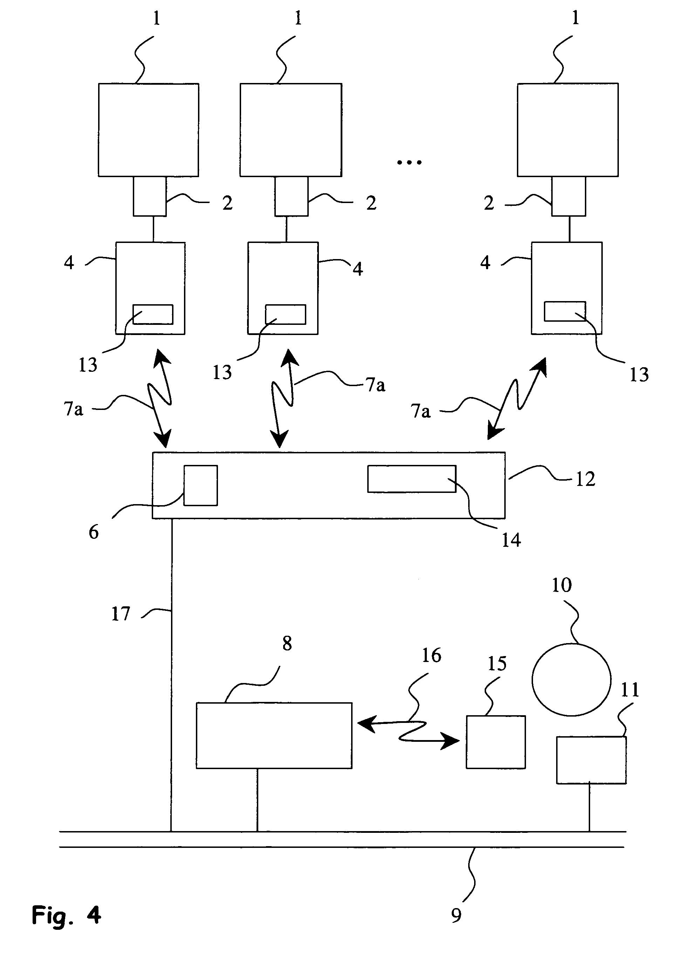

Figure 4 shows another embodiment of the inventive system, wherein the bundling unit 12 is connected to the communications network 9 via a data link 17. The data link 17 could be a wired data link or a wireless data link, e.g. based on a cellular network. Further on, the collecting unit 6 is implemented on the bundling unit 12. This means that the collecting units 4 transmit the uncorrected collected data to the bundling unit. The bundling unit then computes the corrected volume and transmits these corrected volumes to the administration unit 8. This could be advantageous, because only one collecting unit 6 has to be implemented within the system shown in figure 4. However, it is expected that the decision how and where to implement the collecting unit 6 is based on the available computing power of the collecting unit 4 and the bundling unit 12. It is in particular conceivable, that a correction unit 6 is implemented at some or all of the collecting units 4 and at the bundling unit 12. This could increase the flexibility in updating an existing system, e.g. by adding a bundling unit 12 or by adding a further collecting unit 4, since collecting units 4 could be connected to the bundling unit 12, independent on whether a correction unit 6 is implemented on the collecting unit 4 or not.

It is also conceivable that the collecting unit 6 is located on the administration unit 8. This would mean, that the measured data are transmitted from the collecting units 4 to the bundling unit 12. The bundling unit 12 would then store the measured data of each collecting unit 4, at least until transmission of these data to the administration unit 8.

According to figure 4, the person 10 has now access to a mobile device 15, for example a cellular telephone that can be connected via a wireless data link 16 to the administration unit 8. If the person 10 is an administrator, it is conceivable that the administration unit 8 transmits messages according to the status of the system via the data link 16 to the mobile device 15. Such messages are preferably transmitted, upon an event indicating a failure of the system or at least a component of the system.

The communication network 9 could be used to transmit or to change parameters that have to be considered when generating the corrected volumetric data. Therefore, the person 10, in particular an administrator, uses the personal computer 11 or the mobile device 15 and establishes a connection to the administration unit 8. The administration unit 8 provides for example a portal that causes the administrator to input a user ID and a password. Then the administrator is allowed to change or input new parameters. The administrator then can cause the administration unit 8 to transmit the parameters to the collecting unit 6 which is located on the bundling unit 12 and/or the collecting unit 4.

According to another embodiment, not shown in the figures, the collecting unit 4, the correcting unit 6, the bundling unit 12, and/or the administration unit comprises means for attaching a keyboard. The keyboard could be used to service the unit, to request information to be displayed on the display, to input new parameters or to reprogram or reconfigure the processing unit.

Further sensors can be attached to the administration unit 8, the computer 11, the bundling unit 12, or the collecting units 4 that measure further parameters, for example the atmospheric pressure.

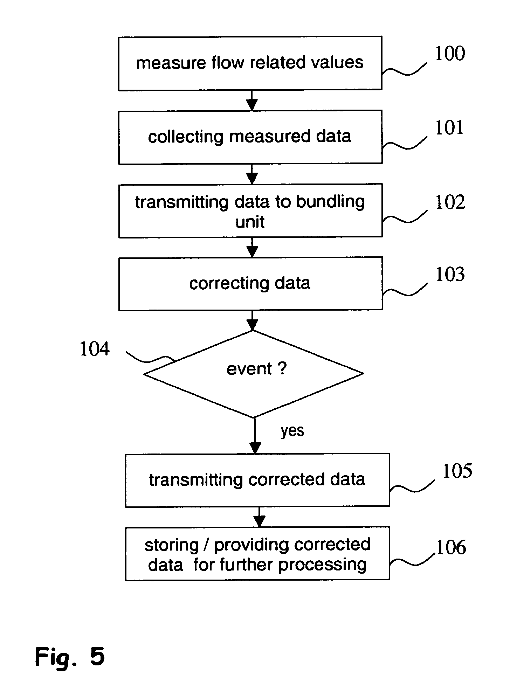

Figure 5 shows some aspects of the inventive method using a simplified schematical data flow diagram.

In a step 100 the flow meter 1 measures the flow of the medium, which is a fluid or a gas. The flow meter comprises a counter-mechanism. The counter-mechanism generates pulses indicating that a specifiable amount of gas or liquid has passed through the flow meter 1.

In a step 101, these pulses are identified via the sensor 2 and transmitted to the collecting unit 4 via data link 5. Data link 5 could be realised as a wired data link. Data link 5 could also be realised as a wireless data link, in particular based on a bluetooth or a WLAN data transmission protocol.

It is conceivable, that more than one sensor is attached to the flow meter 1. If these sensors provide at least partly redundant data, a plausibility check could be performed within the collection unit 4, possibly preventing from collecting data in case of a defect sensor or in case of disturbed sensor signals. Further on, a temperature sensor could be attached to the flow meter 1 for also determining the temperature of the gas or liquid flowing through the gas meter. These data would also be transmitted to the collecting unit 4.

The collecting unit 4 causes the collected data to be transmitted to the bundling unit 12 in a step 102. Therefore, the collecting unit comprises means for data transmission, e.g. a WLAN adapter or a wired network card. Further on, the collecting unit 4 could comprise means for receiving and evaluating instructions from the administration unit 8. If the collecting unit 4 has also collected temperature related data, these data are also transmitted to the bundling unit 12.

In a step 103 the bundling unit 12 evaluates parameters that have to be used for computing a precise volume. These parameters describe for example a gas pressure, an atmospheric pressure, a gas temperature, and the like. The parameters are stored in a memory element attached to the bundling unit 12. The parameters could be received from the administration unit 8 via data link 17. According to an evaluation of the parameters, the bundling unit 12 transmits the data of each flow meter to the correction unit 6 which generates the corrected volumetric data. The corrected volumetric flow is than stored in a memory element, attached to the bundling element 12.

In a step 104 the bundling unit 12 checks, whether an event has occurred, upon which the generated corrected volumetric data have to be transmitted to the administration unit 8. If this is not the case, the bundling unit 12 further stores the generated corrected volumetric data. Such an event could describe a request of the administration unit 8, an overflow of the storage space or a predefined time or time-limit.

If such an event has occurred, the bundling unit 12 causes the generated corrected volumetric data to be transmitted to the administration unit 8 in a step 105.

However, it is also conceivable, that the bundling unit 12 causes the correction unit 6 to generate the corrected volumetric data not until the corrected volumetric data have to be transmitted to the administration unit 8. In particular, it is conceivable, that the administration unit request the corrected volumetric data according to one or more flow meters 1 from the bundling unit 12. The bundling unit 12 then request the colleted data to be transmitted from the corresponding collecting units 4 to the bundling unit 12. Upon receiving these data, the bundling unit 12 causes the collected data to be input to the correction unit 6 for generating the corrected volumetric data. The bundling unit 12 (or the correction unit 6 itself) then causes the corrected volumetric data to be transmitted to the administration unit 8.

In a step 106 the corrected volumetric data are received by the administration unit 8. The administration unit then either automatically transmits these data e.g. to the administrator or the gas utility or stores these data until they have to be further transmitted or further processed.

As already mentioned above, the system could also be realized without using a bundling unit 12. In this case, the functionality of the bundling unit 12 could be omitted or realized by the administration unit 8. It is further conceivable, that the system does also not comprise an administration unit 8 as shown in figures 1 to 4. In this case, the functionality of the administration unit 8 could be omitted or be realized by the collecting unit 4.

The also already mentioned above, the correcting unit 6 could be realized by attaching it to the collecting unit 4, the bundling unit 12 or the administration unit 8. The correcting unit 6 could also be realized as a separate processing unit. Advantageously, the correcting unit 6 then also comprises means for receiving and transmitting data.

The correcting unit 6 could also be realised as a distributed system. Then, different sub-processes of the correction process could be executed by different processing units. Each Sub-processes could comprise a correction taking one or more parameters into account. For example, the collecting unit 4 could correct the data received from sensor 2 in taking the gas temperature into account and/or in taking characteristics of the mechanical gas meter into account. The bundling unit 12 could further correct the data according to an atmospheric pressure, wherein this parameter could be received from the administration unit 8 or from the administrator. The administration unit 8 could further correct the data by taking the gas pressure into account. Of course, various further embodiments concerning the implementation of the correcting unit 4 are conceivable to a person skilled in the art.

According to another aspect of the present invention, data could also be transmitted top-down. In particular, parameters related to data correction, ciphering or authentication could be transmitted from the administration unit 8 to the bundling unit 12, the correction unit 4, and/or the collecting unit 4. Data could also be transmitted from the bundling unit 12 to the correction unit 6 and/or the collecting unit 4.

Furthermore, it is conceivable that not only data directly related to the measured and/or corrected data are transmitted within the system, but to also transmit information e.g. related to administration of the system. In particular, it is conceivable, that alarm signals are transmitted top-down and/or bottom up. For example, a failure in the flow meter 1 could be detected and transmitted to the administration unit 12. New software updates could be transmitted from the administration unit 8 to the bundling unit 12, the correction unit 6, the collecting unit 4, and/or sensor 2.

According to a further embodiment of the present invention data compression techniques can be applied to reduce the amount of data that have to be transmitted. Due to security reasons, data could further be ciphered before transmission and deciphered after receiving the data. These techniques could be applied to any or all transmissions of data within the system, i.e. data transmissions between sensor 2, collecting unit 4, correction unit 6, bundling unit 12, administration unit 8, and personal computer 11 or mobile device 15.

Further on, authentication techniques could be applied due to security reasons causing
- a processing unit to only receive or at least process received data, if the sending processing unit is authenticated and/or
- a processing unit to only transmit data, if the receiving processing unit is authenticated.

## Claims

1. System for collecting and processing information related to a volumetric flow, wherein the system comprises a mechanical flow meter for measuring volumetric flow of a medium, in particular a gas or a liquid, **characterized in that** the system further comprises
- at least one sensor attached to the flow meter and adapted to provide data related to the measured flow,
- a collecting unit connectable to the sensor and adapted to receive the measured data, to determine the volumetric flow depending on the received data, and to provide the determined volumetric flow for being displayed, further processed, or transmitted via a communication network.

2. System according to claim 1, **characterized in that** the sensor is embodied as a magnetic sensor or an acoustic sensor, attached to a counter mechanism of the flow meter and providing measured data realizing a total or relative count.

3. System according to claim 1 or 2, **characterized in that** the system further comprises a correction unit adapted to automatically correct the measured data or the volumetric flow depending on at least one parameter describing at least one mechanical characteristic of the flow meter.

4. System according to claim 3, **characterized in that** the mechanical characteristic of the flow meter is individually predetermined.

5. System according to claim 3 or 4, **characterized in that** the correction unit is adapted to correct the measured data or the volumetric flow depending on
- a temperature of the medium,
- a pressure of the medium, or
- an atmospheric pressure.

6. System according to any one of the preceding claims, **characterized in that** the system further comprises an administration unit connectable to the communication network and adapted to receive the determined volumetric flow.

7. System according to claim 6, **characterized in that** the administration unit is further adapted to transmit parameters related to collecting, correcting or evaluating data to the corresponding unit.

8. System according to any one of the preceding claims, **characterized in that** the system further comprises a bundling unit connectable to the communications network and adapted to receive measured data or the volumetric flow from several collecting units.

9. System according to claim 8, **characterized in that** the bundling unit is further adapted to communicate with the administration unit.

10. System according to any one of the preceding claims, **characterized in that** data are transmitted using at least one technique of ciphering, compression, or authentication.

11. System according to any one of the preceding claims, **characterized in that** the administration unit is
- connectable to the Internet;
- adapted to provide information related to the volumetric flow upon request of an authenticated user or administrator;
- adapted to receive information for configuring the system and to transmit information to the collecting unit, the correction unit, or the bundling unit; or
- adapted to receive at least one information related to data correction and transmit the information to the correction unit.

12. Method for collecting and processing information related to a volumetric flow, wherein values related to the volumetric flow of a gas or a liquid are measured by means of a mechanical flow meter, **characterized in that** the method comprises the steps of
- collecting measured data related to the measured flow by means of a sensor attached to the flow meter and adapted to transmit the measured data to a collecting unit;
- receiving the measured data by the collecting unit and determining the volumetric flow depending on the measured data;
- automatically correcting the measured data or the volumetric flow depending on at least one parameter possibly increasing the preciseness by means of a correction unit.

13. Method according to claim 12, **characterized in that** the sensor is attached to a counter mechanism of the flow meter and embodied as a magnetic sensor or an acoustic sensor.

14. Method according to claim 14, **characterized in that** the measured data or the volumetric flow is corrected depending on at least one of the parameters describing
- a temperature of the medium,
- a pressure of the medium,
- an atmospheric pressure,
- a mechanical characteristic of the flow meter.

15. Method according to claim 12 or 13, **characterized in that** the method further comprises the step of providing the determined volumetric flow for being displayed, further processed, or transmitted via a communications network.

16. Method according to any one of claims 12 to 15, **characterized in that** the method further comprises the step of receiving the determined volumetric flow by an administration unit connectable to the communication network.

17. Method according to claim 16, **characterized in that** the administration unit causes
- the determined volumetric flow to be displayed,
- the determined volumetric flow to be transmitted via the communications network upon request, or
- the parameters related to collecting, correcting or evaluating data to be transmitted to the corresponding unit.

18. Method according to any one of claims 12 to 17, **characterized in that** measured data or the volumetric flow from several collecting units is received by a bundling unit connectable to the communications network.

19. Method according to any one of claims 16 to 18, **characterized in that** the bundling unit communicates with the administration unit.

20. Method according to any one of claims 12 to 19, **characterized in that** transmitting data involves at least ciphering, compression, or authentication of the data.

21. Method according to any one of claims 12 to 20, **characterized in that** the administration unit
- provides information related to the volumetric flow upon request of an authenticated user or administrator;
- receives information for configuring the collecting unit, the correction unit, or the bundling unit and causes these information to be transmitted to the collecting unit, the correction unit, or the bundling unit;

22. Method according to any one of claims 12 to 21, **characterized in that** the bundling unit automatically transmits the collected data to the administration unit depending on an event at least describing
- a request of the administration unit,
- a predefined time,
- a predefined time interval,
- an alarm signal, or
- an amount of available or used storage space.

23. Method according to any one of claims 12 to 22, **characterized in that** data are transmitted between the administration unit and the bundling unit, the administration unit and the correction unit, the administration unit and the collecting unit, the bundling unit and the correction unit, the bundling unit and the collection unit, the collecting unit and the correction unit, or the sensor and the collecting unit via a wireless communication network.

24. Method for upgrading a mechanical volumetric flow meter for collecting and processing information related to a volumetric flow by attaching a system according to any one of claims 1 to 11 to the flow meter.

25. Computer program which can be run on a system for collecting and processing information related to a volumetric flow, in particular on at least on component of the system, **characterized in that** the computer program is programmed to execute a method according to any one of the claims 12 to 23.

26. The computer program of claim 25, wherein the computer program is stored on a memory element and wherein the memory element is a disk, a compact disk (CD), a digitally versatile disk (DVD), and/or at least one part of a RAM or a ROM that is assigned to at least one component of the system.
